(19) Europäisches Patentamt
European Patent Office
Office européen des brevets

(11) **EP 4 764 477 A1**

(12) **EUROPEAN PATENT APPLICATION**
published in accordance with Art. 153(4) EPC

(43) Date of publication:
**24.06.2026  Bulletin 2026/26**

(21) Application number: **24875004.4**

(22) Date of filing: **04.10.2024**

(51) International Patent Classification (IPC):
*G01N 23/20* (2018.01)   *H01M 4/64* (2006.01)
*H01M 4/04* (2006.01)   *H01M 4/02* (2006.01)

(52) Cooperative Patent Classification (CPC):
**G01N 23/20; H01M 4/02; H01M 4/04; H01M 4/64;**
**Y02E 60/10**

(86) International application number:
**PCT/KR2024/015132**

(87) International publication number:
**WO 2025/075449 (10.04.2025 Gazette 2025/15)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **06.10.2023  KR 20230133820**

(71) Applicant: **LG Energy Solution, Ltd.**
**Seoul 07335 (KR)**

(72) Inventors:
• **NA, Seon Hyeong**
**Daejeon 34122 (KR)**
• **PAENG, Ki Hoon**
**Daejeon 34122 (KR)**

(74) Representative: **Hoffmann Eitle**
**Patent- und Rechtsanwälte PartmbB**
**Arabellastraße 30**
**81925 München (DE)**

(54) **APPARATUS FOR INSPECTING ELECTRODE CURRENT COLLECTORS, ELECTRODE MANUFACTURING APPARATUS, AND ELECTRODE MANUFACTURING METHOD**

(57)     An apparatus for inspecting an electrode current collector according to the present invention includes a data collection unit, which is on an electrode current collector between a plurality of transfer rollers for transferring or stopping the electrode current collector in a longitudinal direction, and configured to perform XRD analysis on the electrode current collector in a stationary state to collect full-width-of-half-maximum data of a (hkl) plane, and a selection unit configured to select an electrode current collector having a potential density difference ($\alpha$) of 0.20 or less as defined by Equation 1 below by using the above data.

[Equation 1]

$$\alpha = \frac{\sqrt{(\frac{A(111) - B(111)}{A(111)})^2 + (\frac{A(200) - B(200)}{A(200)})^2 + (\frac{A(220) - B(220)}{A(220)})^2 + (\frac{A(311) - B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

**(Cont. next page)**

FIG. 1

**Description**

## TECHNICAL FIELD

This application claims the benefit of priority from Korean Patent Application No. 10-2023-0133820, filed on October 6, 2023, in the Korean Intellectual Property Office, the disclosure of which is incorporated herein in its entirety by reference.

The present invention relates to an apparatus for inspecting an electrode current collector, an apparatus for manufacturing an electrode, and a method of manufacturing an electrode.

## BACKGROUND ART

As the technology development and demand for electric vehicles and energy storage systems (ESS) have increased, the demand for secondary batteries as an energy source has been rapidly increased, and accordingly, studies have been conducted on batteries which may meet various needs. Particularly, studies have been actively conducted on a lithium secondary battery as a power source for such devices, which has high energy density and excellent lifespan and cycle properties.

In general, depending on the material of a battery case, lithium secondary batteries are classified into can-type batteries, in which an electrode assembly is embedded in a cylindrical or prismatic metal can, and pouch-type batteries, in which an electrode assembly is embedded in a pouch-type case of aluminum laminate sheet. An electrode assembly is composed of a structure including a positive electrode, a negative electrode, and a separator interposed between the positive electrode and the negative electrode, and is a power generation device capable of charging and discharging. Here, the positive electrode may have a structure in which a positive electrode current collector and a positive electrode active material layer are sequentially stacked, and the negative electrode may have a structure in which a negative electrode current collector and a negative electrode active material layer are sequentially stacked. A foil made of an aluminum material may be generally used as the positive electrode current collector, and a foil made of a copper material may be generally used as the negative electrode current collector.

Typically, the evaluation of mechanical properties of an electrode current collector, such as strength and elongation, is conducted through destructive inspection such as a tensile test, so an electrode current collector on which the tensile test has performed cannot be used. In addition, the method of evaluating mechanical properties through destructive inspection has a problem in that it is difficult to accurately determine the mechanical properties of an electrode current collector since result values may vary depending on a sampling status or a tester's skill level. Accordingly, there is a need for technology for accurately evaluating mechanical properties of an electrode current collector by non-destructive inspection.

## DISCLOSURE OF THE INVENTION

## TECHNICAL PROBLEM

In order to solve the above-described problem, the present invention is to provide an apparatus for inspecting an electrode current collector, an apparatus for manufacturing an electrode, and a method for manufacturing an electrode, which are capable of increasing the accuracy of evaluation of mechanical properties of an electrode current collector, such as strength and elongation, through non-destructive inspection.

## TECHNICAL SOLUTION

[1] The present invention provides an apparatus for inspecting an electrode current collector, wherein the apparatus includes a data collection unit, which is on an electrode current collector between a plurality of transfer rollers for transferring or stopping the electrode current collector in a longitudinal direction, and configured to perform XRD analysis on the electrode current collector in a stationary state to collect full-width-of-half-maximum data of a (hkl) plane, and a selection unit configured to select an electrode current collector having a potential density difference ($\alpha$) of 0.20 or less as defined by Equation 1 below by using the above data.

[Equation 1]

$$\alpha = \frac{\sqrt{(\frac{A(111) - B(111)}{A(111)})^2 + (\frac{A(200) - B(200)}{A(200)})^2 + (\frac{A(220) - B(220)}{A(220)})^2 + (\frac{A(311) - B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

[2] In [1] above, the present invention provides an apparatus for inspecting an electrode current collector, wherein the selection unit is configured to select an electrode current collector having a potential density difference ($\alpha$) of 0.18 or less.

[3] In any one or more of [1] and [2] above, the present invention provides an apparatus for inspecting an electrode current collector, wherein the electrode current collector includes a plurality of coating regions respectively coated with an electrode slurry composition, and an uncoated portion between the plurality of coating regions, and the data collection unit is configured to perform XRD analysis on the uncoated portion to collect the full-width-of-half-maximum data of the (hkl) plane.

[4] In any one or more of [1] to [3] above, the present invention provides an apparatus for inspecting an electrode current collector, wherein the electrode current collector selected by the selection unit has an ultimate tensile strength (UTS) of 20.0 kfg/mm$^2$ or greater.

[5] In any one or more of [1] to [4] above, the present invention provides an apparatus for inspecting an electrode current collector, wherein the electrode current collector selected by the selection unit has an elongation (EL) of 1.5% or greater.

[6] In any one or more of [1] to [5] above, the present invention provides an apparatus for inspecting an electrode current collector, wherein the electrode current collector selected by the selection unit has a crystal grain size of 0.70 $\mu$m or less.

[7] In any one or more of [1] to [6] above, the present invention provides an apparatus for inspecting an electrode current collector, wherein the electrode current collector is a positive electrode current collector.

[8] In any one or more of [1] to [7] above, the present invention provides an apparatus for manufacturing an electrode current collector, wherein the apparatus includes a roller-shaped unwinding part in which an electrode current collector is wound in one direction, a transfer part configured to continuously transfer the electrode current collector, a coating part configured to apply and dry an electrode active material layer on at least one surface of the electrode current collector, and an inspection unit including the inspection apparatus of claim 1.

[9] In any one or more of [1] to [8] above, the present invention provides an apparatus for manufacturing an electrode current collector, wherein the electrode current collector heat-treated in the coating part is selected through the inspection unit.

[10] In any one or more of [1] to [9] above, the present invention provides an apparatus for manufacturing an electrode current collector, wherein the electrode current collector is a positive electrode current collector.

[11] The present invention provides a method for manufacturing an electrode, wherein the method includes processes of (S1) unwinding and then continuously feeding and transferring a current collector from a roller-shaped unwinding part in which an electrode current collector is wound in one direction, (S2) applying and drying an electrode active material layer on at least one surface of the electrode current collector, and (S3) inspecting the electrode current collector, wherein the process of inspecting of the electrode current collector includes steps of (a) stopping the electrode current collector being transferred, and performing XRD analysis on the electrode current collector to collect full-width-of-half-maximum data of a (hkl) plane, (b) selecting an electrode current collector having a potential density difference ($\alpha$) of 0.20 or less as defined by Equation 1 below by using the above data, and (c) resuming transferring the electrode current collector.

[12] In [11] above, the present invention provides a method for manufacturing an electrode, wherein the method further includes (S4) a process of roll-pressing the electrode current collector on which the electrode active material layer is applied and dried, and (S5) a winding process for winding the roll-pressed electrode current collector into a roll form.

## ADVANTAGEOUS EFFECTS

An apparatus for inspecting an electrode current collector according to the present invention performs XRD analysis to select an electrode current collector having a potential density difference ($\alpha$) of 0.20 or less as defined by Equation 1 below from full width of half maximum data of (hkl) planes of a reference electrode current collector and an electrode current collector to be inspected, thereby evaluating mechanical properties of the electrode current collector by using XRD, which is non-destructive inspection, unlike a destructive inspection in which result values vary depending on a sampling status or a tester's skill level. Therefore, the present invention enables monitoring or screening mechanical properties of an electrode current collector with high accuracy.

[Equation 1]

$$\alpha = \frac{\sqrt{(\frac{A(111) - B(111)}{A(111)})^2 + (\frac{A(200) - B(200)}{A(200)})^2 + (\frac{A(220) - B(220)}{A(220)})^2 + (\frac{A(311) - B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

In addition, if the technology for accurately evaluating mechanical properties of an electrode current collector is introduced as an in-line process, it is possible to predict in advance and prevent degradation in strength of an electrode current collector heat-treated in the process, thereby resolving defects such as roll-pressing disconnection, tab disconnection, and tab folding, which may occur during electrode manufacturing.

## BRIEF DESCRIPTION OF THE DRAWINGS

FIG. 1 is a schematic view for describing an electrode manufacturing apparatus according to an embodiment of the present invention.
FIG. 2 is an XRD graph of a reference positive electrode current collector in an experimental example.
FIG. 3 is an XRD graph of Sample 4 in an experimental example.
FIG. 4 is a graph showing a relationship between a potential density difference ($\alpha$) and a defect rate compared to a normal state.

## MDOE FOR CARRYING OUT THE INVENTION

Advantages and features of the present invention, and implementation methods thereof will be clarified through following embodiments described with reference to the accompanying drawings. The present invention may, however, be embodied in different forms and should not be construed as limited to the embodiments set forth herein. Rather, these embodiments are provided so that this disclosure will be thorough and complete, and will fully convey the scope of the present invention to those skilled in the art. Further, the present invention is only defined by scopes of claims. Like reference numerals refer to like elements throughout the specification.

Unless otherwise defined, all the terms used herein (including technical and scientific terms) will be used in a sense that can be commonly understood to those of ordinary skill in the art to which the inventive concept pertains. In addition, the terms that are defined in a commonly used dictionary are not interpreted ideally or excessively unless specifically defined.

The terms used herein are for the purpose of describing embodiments and are not intended to be limiting of the present invention. In the present specification, singular forms include plural forms unless the context clearly indicates otherwise. As used herein, the terms "comprises" and/or "comprising" are intended to be inclusive of the stated elements, and do not exclude the possibility of the presence or the addition of one or more other elements.

In the present specification, when a portion is said to include a certain element, it means that the portion may further include another element rather than excluding another element unless otherwise stated.

In the present specification, the description of "A and/or B" means A, or B, or A and B.

In the present specification, "%" means wt% unless otherwise noted.

In the present specification, a "crystal grain" means a single crystal grain unit having a regular atomic arrangement, and may be confirmed through Electron Backscatter Diffraction (EBSD) analysis.

## Electrode current collector inspection apparatus

An apparatus for inspecting an electrode current collector according to the present invention includes a data collection unit, which is on an electrode current collector between a plurality of transfer rollers for transferring or stopping the electrode current collector in a longitudinal direction, and configured to perform XRD analysis on the electrode current collector in a stationary state to collect full-width-of-half-maximum data of a (hkl) plane, and a selection unit configured to select an electrode current collector having a potential density difference ($\alpha$) of 0.20 or less as defined by Equation 1 below by using the above data.

[Equation 1]

$$\alpha = \frac{\sqrt{(\frac{A(111)-B(111)}{A(111)})^2 + (\frac{A(200)-B(200)}{A(200)})^2 + (\frac{A(220)-B(220)}{A(220)})^2 + (\frac{A(311)-B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

Typically, the evaluation of mechanical properties of an electrode current collector, such as strength and elongation, is conducted through destructive inspection such as a tensile test, so an electrode current collector on which the tensile test has performed cannot be used. In addition, the method of evaluating mechanical properties through destructive inspection has a problem in that it is difficult to accurately determine the mechanical properties of an electrode current collector since result values may vary depending on a sampling status or a tester's skill level. Accordingly, there is a need for technology for accurately evaluating mechanical properties of an electrode current collector by non-destructive inspection.

Accordingly, the inventors of the present invention have confirmed that by performing XRD analysis to select an electrode current collector having a potential density difference ($\alpha$) of 0.20 or less as defined by Equation 1 below from full width of half maximum data of (hkl) planes of a reference electrode current collector and an electrode current collector to be inspected, it is possible to evaluate mechanical properties of the electrode current collector with high accuracy by using XRD, which is non-destructive inspection, unlike a destructive inspection in which result values vary depending on a sampling status or a tester's skill level.

Hereinafter, an apparatus for inspecting an electrode current collector according to the present invention will be described in more detail.

(1) Data collection unit
the data collection unit is on an electrode current collector between a plurality of transfer rollers for transferring or stopping the electrode current collector in a longitudinal direction, and serves to perform XRD analysis on the electrode current collector in a stationary state to collect full-width-of-half-maximum data of a (hkl) plane.

Specifically, the electrode current collector includes a plurality of coating regions respectively coated with an electrode slurry composition, and an uncoated portion between the plurality of coating regions, and the data collection unit may perform XRD analysis on the uncoated portion to collect the full-width-of-half-maximum data of the (hkl) plane.

Since various heat-treatment processes are included in an electrode manufacturing process, the strength of an electrode current collector may gradually decrease as the electrode current collector undergoes each process, in which case, the electrode current collector may be fractured due to tension during a roll-to-roll process. Particularly, if the strength of the uncoated portion of the electrode current collector is lowered, there is a problem in that defects such as roll-pressing disconnection, tab disconnection, and tab folding are highly likely to occur during electrode manufacturing.

Accordingly, if the technology for accurately evaluating mechanical properties of an electrode current collector is introduced as an in-line process, it is possible to predict in advance and prevent degradation in strength of an uncoated portion of the electrode current collector, thereby resolving defects which may occur during the electrode manufacturing.

(2) Selection unit

The selection unit performs a role of selecting an electrode current collector by using the full-width-of-half-maximum data of the (hkl) plane collected by performing XRD analysis in the data collection unit. Specifically, the selection unit may select an electrode current collector having a potential density difference ($\alpha$) of 0.20 or less, preferably 0.18 or less, and more preferably 0.01 to 0.18, as defined by Equation 1 below. An electrode current collector having the potential density difference ($\alpha$) of greater than 0.20 has a problem in that mechanical properties thereof, such as ultimate tensile strength (UTS) and elongation (EL), are greatly reduced, and thus, is more likely to be fractured during a roll-to-roll process.

[Equation 1]

$$\alpha = \frac{\sqrt{(\frac{A(111)-B(111)}{A(111)})^2 + (\frac{A(200)-B(200)}{A(200)})^2 + (\frac{A(220)-B(220)}{A(220)})^2 + (\frac{A(311)-B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

That is, the apparatus for inspecting an electrode current collector according to the present invention selects an electrode current collector having the potential density difference ($\alpha$) of 0.20 or less, thereby evaluating mechanical properties of the electrode current collector by using XRD, which is non-destructive inspection, unlike a destructive inspection in which result values vary depending on a sampling status or a tester's skill level.

For example, an electrode current collector having a potential density difference ($\alpha$) of greater than 0.20 is not selected by the selection unit, and if the mechanical properties thereof, such as tensile strength (UTS) and elongation (EL), are degraded, the electrode current collector is highly likely to be fractured, or have defects such as wrinkles, sagging, and the like during a manufacturing process, which is impossible to be prevented, so that it is preferable to remove the electrode current collector.

Therefore, the present invention enables monitoring or screening mechanical properties of an electrode current collector with high accuracy.

The ultimate tensile strength (UTS) of the electrode current collector selected by the selection unit may be 20.0 kfg/mm$^2$ or greater, preferably 20.0 kfg/mm$^2$ to 35.0 kfg/mm$^2$, more preferably 25.0 kfg/mm$^2$ to 30.0 kfg/mm$^2$.

The elongation (EL) of the electrode current collector selected by the selection unit may be 1.5% or greater, preferably 1.5% to 5.0%, and more preferably 1.6% to 3.0%.

The crystal grain size of the electrode current collector selected by the selection unit may be 0.70 $\mu$m or less, preferably 0.01 $\mu$m to 0.70 $\mu$m, and more preferably 0.10 $\mu$m to 0.60 $\mu$m.

If an electrode current collector selected by the selection unit satisfies the ultimate tensile strength (UTS), the elongation (EL), and the crystal grain size described above, the risk of disconnection due to tension and roll force during a roll-to-roll process of an electrode may be significantly reduced. If the thickness of an electrode is increased or the thickness of a current collector is decreased to achieve high energy density, the risk of disconnection further increases, and the above-described conditions need to be satisfied.

The electrode current collector may be a positive electrode current collector. The positive electrode current collector has increased strength by processing curing through cold roll-pressing, has a very dense microstructure, and has high potential density. However, since various heat-treatment processes are included in an electrode manufacturing process, the positive electrode current collector is characterized by having gradually decreasing strength and hardness, an increasing crystal grain size, and decreasing potential density when absorbing heat energy. Therefore, the positive electrode current collector having degraded strength after a heat-treatment process may be a direct cause of defects such as a roll-pressing disconnection, tab disconnection, and tab folding are highly likely to occur during electrode manufacturing. Accordingly, if the apparatus for inspecting an electrode current collector according to the present invention is introduced as an in-line process, it is possible to predict in advance and prevent degradation in strength of an uncoated portion of the electrode current collector, thereby resolving the above-described defects.

**Electrode manufacturing apparatus**

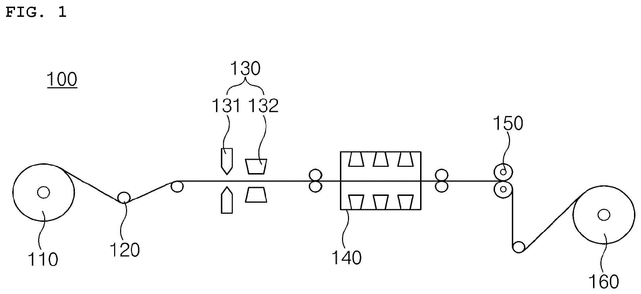

FIG. 1 is a schematic view for describing an electrode manufacturing apparatus according to an embodiment of the present invention.

The electrode manufacturing apparatus 100 according to the present invention includes a roller-shaped unwinding part 110 in which an electrode current collector is wound in one direction, a transfer part 120 configured to continuously transfer the electrode current collector, a coating part 130 configured to apply and dry an electrode active material layer on at least one surface of the electrode current collector transferred from the unwinding part 110, and an inspection unit including the electrode current collector inspection apparatus above.

The unwinding part 110 is a component for unwinding an electrode current collector wound in a roll form. Specifically, the unwinding part 110 may have a roller form, and the electrode current collector may be wound or unwound depending on a rotation direction. The unwinding part 110 may continuously feed the electrode current collector by unwinding the electrode current collector wound in a roll form.

The electrode current collector is not particularly limited as long as it has high conductivity without causing a chemical change in a battery, and for example, may include at least one selected from the group consisting of copper, stainless steel, aluminum, nickel, titanium, heat-treated carbon and an aluminum-cadmium alloy.

The electrode current collector may have microscopic irregularities formed on the surface thereof to improve bonding strength of an active material. For example, the electrode current collector may be used in various forms such as a film, a sheet, a foil, a net, a porous body, a foam, and a non-woven body. Specifically, the electrode current collector may be a negative electrode current collector or a positive electrode current collector. If the electrode current collector is a negative electrode current collector, the negative electrode current collector may include a copper material. In addition, if the electrode current collector is a positive electrode current collector, the positive electrode current collector may include an aluminum material. More specifically, the electrode current collector may be a positive electrode current collector.

In addition, the electrode current collector may typically have a thickness of 3 $\mu$m to 500 $\mu$m, and microscopic irregularities may be formed on the surface of the current collector to improve adhesive force of a positive electrode active material. For example, the electrode current collector may be used in various forms such as a film, a sheet, a foil, a net, a porous body, a foam, and a non-woven body.

The transfer part 120 serves to receive an electrode current collector unwound from the unwinding part 110, and to transfer the electrode current collector to the coating part 130 and the inspection unit 140. Here, the transfer part may be a roll. Next, the electrode current collector unwound from the unwinding part 110 and transferred by the transfer part 120 is transferred to the coating part 130.

The coating part 130 is a component in which an active material slurry is applied and dried on the surface of the electrode current collector to form an active material layer.

The active material slurry may include an active material and a solvent. The surface of the electrode current collector may include a plurality of coating regions respectively coated with the active material slurry, and between the plurality of coating regions, an uncoated portion in which the electrode current collector is exposed to the outside.

The application of the active material layer may be performed by any slurry application method known in the art without limitation. Specifically, any one of slit-die, gravure, doctor blade, silk screen, offset, spray, and dip methods may be used.

For the drying of the active material layer, any drying means known in the art may be applied without limitation as long as it is a method for forming an active material layer by evaporating a solvent from an active material slurry and not to cause a chemical change to the active material slurry. For example, for the drying, a hot air method, a direct heating method, an induction heating method, and the like may be modified and applied, and specifically, the drying temperature may be 30 °C to 250 °C, specifically 40 °C to 200 °C, and more specifically, 50 °C to 170 °C. In addition, the drying time may be 10 seconds to 300 seconds, specifically 20 seconds to 240 seconds, and more specifically 30 seconds to 180 seconds.

The active material may be an active material commonly used in the art, and may specifically be a negative electrode active material or a positive electrode active material. The negative electrode active material may include one or more selected from the group consisting of a lithium metal, a carbon material capable of reversible intercalation/de-intercalation of lithium ions, a metal or an alloy of the metal and lithium, a metal composite oxide, a material capable of doping and undoping lithium, and a transition metal oxide. The positive electrode active material is a compound capable of reversible intercalation and de-intercalation of lithium, and specifically, may include a lithium metal oxide including one or more metals, such as cobalt, manganese, nickel, and aluminum, and lithium. More specifically, the lithium metal oxide includes a lithium-manganese-based oxide, a lithium-cobalt-based oxide, a lithium-nickel-based oxide, a lithium-nickel-manganese-based oxide, a lithium-nickel-cobalt-based oxide, and a lithium-manganese-cobalt-based oxide, a lithium-nickel-manganese-cobalt-based oxide, a lithium-nickel-cobalt-transition metal (M) oxide, or the like, and any one thereof or a mixture of two or more thereof may be included.

The solvent may be a solvent commonly used in the art, and may specifically be an organic solvent or an aqueous solvent. The organic solvent may include at least one selected from the group consisting of dimethyl sulfoxide (DMSO), isopropyl alcohol, N-methylpyrrolidone (NMP), dimethyl formamide (DMF), and acetone. The aqueous solvent may be water ($H_2O$). The amount of solvent to be used is sufficient if the solvent dissolves or disperses the active material, a binder, and a conductive material in consideration of the application thickness and preparation yield of the slurry, and has a viscosity capable of exhibiting excellent thickness uniformity when applied for subsequent electrode manufacturing.

The active material slurry may further include at least one of a conductive material and a binder, along with the active material and the solvent.

The conductive material is used to impart conductivity to an electrode, and any conductive material may be used without particular limitation as long as it has electron conductivity without causing a chemical change in a battery to be constituted. Specific examples thereof may include graphite such as natural graphite or artificial graphite; a carbon-based material such as carbon black, acetylene black, Ketjen black, channel black, furnace black, lamp black, thermal black, and carbon fiber; metal powder or metal fiber of such as copper, nickel, aluminum, and silver; a conductive tube such as a carbon nanotube; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used. The conductive material may be included in an amount of 0.01 wt% to 10 wt%, preferably 0.1 wt% to 9 wt%, and more preferably 0.1 wt% to 5 wt% based on the total weight of a positive electrode active material layer.

The binder serves to improve the bonding between positive electrode active material particles and the adhesion between the positive electrode active material and the current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, polymethylmethacrylate, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated EPDM, styrene-butadiene rubber (SBR), fluorine rubber, a poly acrylic acid, a polymer having the hydrogen thereof substituted with Li, Na, or Ca, or various copolymers thereof, and any one thereof or a mixture of two or more thereof may be used. The binder may be included in an amount of 1 wt% to 30 wt%, preferably 1 wt% to 20 wt%, and more preferably 1 wt% to 10 wt% based on the total weight of a positive electrode active material layer.

The inspection unit 140 includes the above-described electrode current collector inspection apparatus. Specifically, the inspection unit 140 may serve to receive a heat-treated electrode current collector from the coating part 130, and to select the electrode current collector. The electrode manufacturing apparatus 100 according to the present invention introduces an inspection unit for accurately evaluating mechanical properties of an electrode current collector as an in-line process, thereby predicting in advance and preventing degradation in strength of the electrode current collector, so that it is possible to resolve defects which may occur during electrode manufacturing.

The electrode manufacturing apparatus 100 according to the present invention may further include a roll-pressing part 150 for roll-pressing the electrode current collector on which the electrode active material layer is applied and dried, and a winding part 160 for winding the electrode current collector into a roll form.

The roll-pressing part 150 is a component for pressing the electrode current collector coated with the active material layer between a pair of roll-pressing rolls to increase the density of the coating part. The winding part 160 is a component for winding the electrode current collector coated with the active material layer into a roll form. After the electrode current collector is wound in a roll form in the winding part 170, the electrode current collector in the roll form may be stored or transferred for subsequent processes for manufacturing an electrode or a battery (e.g., roll-pressing of an active material layer, manufacturing of an electrode assembly, activation, etc.).

Hereinafter, embodiments of the present invention will be described in detail so that those skilled in the art may easily carry out the present invention. However, the present invention may be embodied in many different forms, and is not limited to the embodiments set forth herein.

## Electrode manufacturing method

The present invention provides a method for manufacturing an electrode, the method including a process of inspecting an electrode current collector.

The method for manufacturing an electrode includes processes of: (S1) unwinding and then continuously feeding and transferring a current collector from a roller-shaped unwinding part in which an electrode current collector is wound in one direction, (S2) applying and drying an electrode active material layer on at least one surface of the electrode current collector, and (S3) inspecting the electrode current collector, wherein the process of inspecting of the electrode current collector includes steps of: (a) stopping the electrode current collector being transferred, and performing XRD analysis on the electrode current collector to collect full-width-of-half-maximum data of a (hkl) plane, (b) selecting an electrode current collector having a potential density difference ($\alpha$) of 0.20 or less as defined by Equation 1 below by using the above data, and (c) resuming transferring the electrode current collector.

[Equation 1]

$$\alpha = \frac{\sqrt{(\frac{A(111) - B(111)}{A(111)})^2 + (\frac{A(200) - B(200)}{A(200)})^2 + (\frac{A(220) - B(220)}{A(220)})^2 + (\frac{A(311) - B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

The method for manufacturing an electrode according to the present invention temporarily stops the transfer of an electrode current collector during a roll-to-roll process for manufacturing an electrode, performs XRD analysis on the electrode current collector to collect full-width-of-half-maximum data of a (hkl) plane, and then selects an electrode current collector having a potential density difference ($\alpha$) of 0.20 or less as defined by Equation 1 above, so that the method enables monitoring or screening mechanical properties of the electrode current collector with high accuracy through an in-line process during electrode manufacturing.

In addition, by introducing the technology for accurately evaluating mechanical properties of the electrode current collector into the in-line process, it is possible to predict in advance and prevent degradation in strength of the electrode current collector heat-treated in the process, thereby resolving defects such as roll-pressing disconnection, tab disconnection, and tab folding, which may occur during the electrode manufacturing.

The method for manufacturing an electrode according to an embodiment of the present invention may further include (S4) a process of roll-pressing the electrode current collector on which the electrode active material layer is applied and dried, and (S5) a winding process for winding the roll-pressed electrode current collector into a roll form.

The roll-pressing process is a process of increasing the density of an electrode active material layer by pressing an electrode current collector on which the electrode active material layer is applied and dried, and for example, may be performed by a method of allowing the electrode current collector on which the electrode active material layer is formed to pass through between a pair of roll-pressing rolls, thereby pressing the electrode current collector.

The winding process is a process of obtaining the electrode current collector, on which the electrode active material layer is formed though applying, drying, and roll-pressing the electrode active material layer, in a roll form, and the electrode current collector wound in the roll form may be stored or transferred for subsequent processes for manufacturing an electrode or a battery (e.g., roll-pressing of an active material layer, manufacturing of an electrode assembly, activation, etc.).

**Experimental Example 1: XRD Analysis and calculation of potential density difference of positive electrode current collector**

(1) XRD analysis of positive electrode current collector

A commercially available aluminum foil having a thickness of 15 $\mu$m was prepared as a reference positive electrode current collector, and four types of aluminum foils (Samples 1 to 4) having a thickness of 15 $\mu$m were prepared as positive electrode current collectors to be inspected. X-ray diffraction (XRD) analysis was performed on each of the aluminum foil samples. In this case, the X-ray diffraction analysis was performed using an X-ray diffraction analyzer (Bruker AXS D4 Endeavor) at 25 °C under the following conditions.

- Source: Cu Target ($\lambda$=1.5418 Å)
- 2$\theta$: 20°to 120°
- Step size: 0.02°/s
- Total scan time: 150 min
- Voltage: 40 kV
- Current: 40 mA

(2) Calculation of full width of half maximum (FWHM) and potential density difference ($\alpha$) of positive electrode current collector

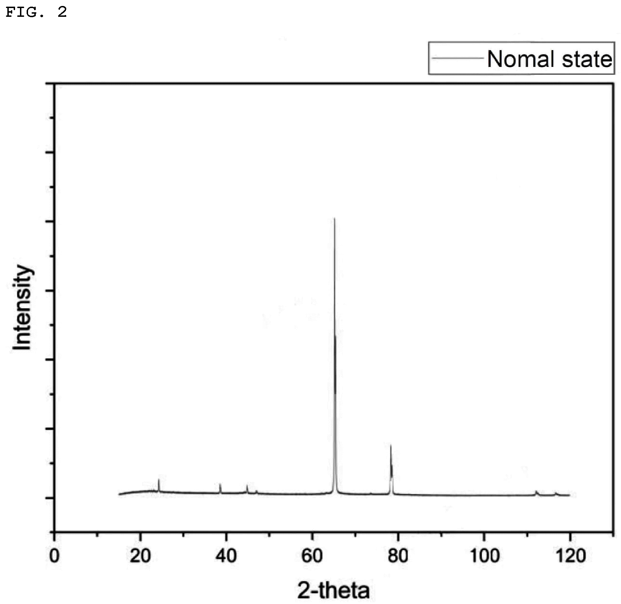

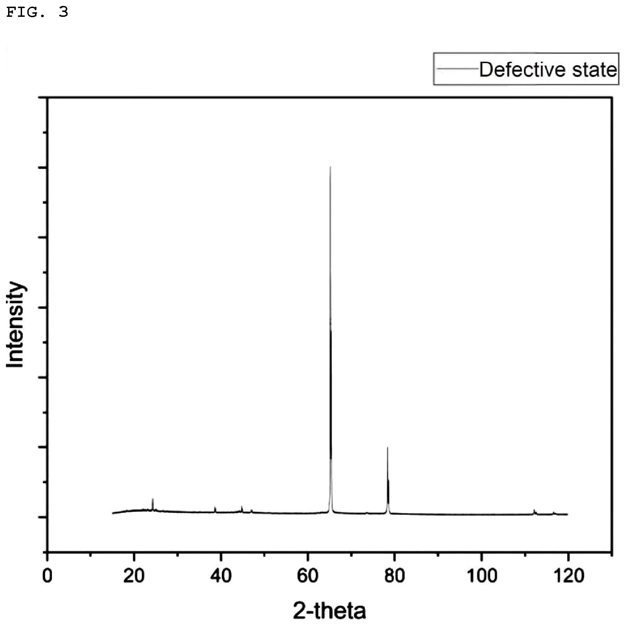

The full width of half maximum (FWHM) of each peak was measured for the aluminum foil of the reference positive electrode current collector and of each of Samples 1 to 4, which are the positive electrode current collectors to be inspected, from XRD graphs obtained by the X-ray diffraction analysis according to Experimental Example 1, and then the potential density difference ($\alpha$) defined by Equation 1 below was calculated. The results are shown in [Table 1] below, and the XRD graphs of the reference positive electrode current collector and Sample 4 are shown in FIG. 2 and FIG. 3, respectively.

[Equation 1]

$$\alpha = \frac{\sqrt{(\frac{A(111) - B(111)}{A(111)})^2 + (\frac{A(200) - B(200)}{A(200)})^2 + (\frac{A(220) - B(220)}{A(220)})^2 + (\frac{A(311) - B(311)}{A(311)})^2}}{4}$$

In Equation 1 above, A(hkl) is a full width of half maximum of a (hkl) plane of a reference electrode current collector, wherein A(111)=0.089, A(200)=0.102, A(220)=0.113, and A(311)=0.138, and B(hkl) is a full width of half maximum of a (hkl) plane of an electrode current collector to be inspected.

Specifically, Samples 1 to 4 are the reference positive electrode current collectors heat-treated under different conditions, wherein Sample 1 is the reference positive electrode current collectors heat-treated at 160 °C for 3 minutes, Sample 2 is the reference positive electrode current collectors heat-treated at 170 °C for 3 minutes, Sample 3 is the reference positive electrode current collectors heat-treated at 200 °C for 3 minutes, and Sample 4 is the reference positive electrode current collectors heat-treated at 230 °C for 3 minutes. Even though the same current collector is used, and manufactured under the same conditions, there may be a situation in which the actual current collector is heat-treated at a higher temperature than the standard due to process errors and manufacturing variables, so under the assumption of such a case, samples heat-treated at various temperatures were set as experimental conditions.

[Table 1]

|  | XRD full width of half maximum (FWHM) | | | | Potential density difference ($\alpha$) |
|---|---|---|---|---|---|
|  | (111) | (200) | (220) | (311) |  |
| Reference | 0.089 | 0.102 | 0.113 | 0.138 | - |
| Sample 1 | 0.071 | 0.065 | 0.086 | 0.098 | 0.12 |
| Sample 2 | 0.061 | 0.065 | 0.071 | 0.087 | 0.18 |
| Sample 3 | 0.054 | 0.059 | 0.065 | 0.069 | 0.22 |
| Sample 4 | 0.045 | 0.057 | 0.062 | 0.065 | 0.24 |

**Experimental Example 2: Measurement of mechanical properties and average crystal grain size of positive electrode current collector**

(1) Mechanical properties of positive electrode current collector

The ultimate tensile strength (UTS) and elongation (EL), which are mechanical properties of the aluminum foil of the reference positive electrode current collector and of each of Samples 1 to 4, which are the positive electrode current collectors to be inspected, were measured.

Specifically, the positive electrode current collector was punched to a size of 150 mm $\times$ 12.7 mm. In this case, the direction of the punching was set to a direction (MD direction) parallel to a direction of electrode driving. The sample was fastened to upper/lower jigs of a Universal Testing Machine (UTM), wherein the gauge length was set to 50 mm, and the measurement rate was set to 20 mm/min, and the ultimate tensile strength (UTS) was measured by pulling the sample in an up-and-down direction until the sample was fractured.

Specifically, the aluminum foil of the reference positive electrode current collector and of each of Samples 1 to 4, which are the positive electrode current collectors to be inspected, was cut to a width of 12.7 mm. Both ends of the cut sample were fastened to the upper and lower jigs of measuring equipment (UTM, Zwick Inc.) respectively, and then pulled in the up and down direction to measure the elongation (unit: %) of the positive electrode current collector. The measurement results are shown in [Table 2] below.

(2) Average crystal grain size of positive electrode current collector

The average crystal grain size of the aluminum foil of the reference positive electrode current collector and of each of Samples 1 to 4, which are the positive electrode current collectors to be inspected, was measured. Specifically, the average crystal grain size of a copper foil was measured by electron backscatter diffraction (EBSD) analysis. The measurement results are shown in [Table 2] below.

[Table 2]

|  | Ultimate tensile strength [UTS, kfg/mm$^2$] | Elongation [EL, %] | Average crystal grain size [$\mu$m] |
|---|---|---|---|
| Reference | 27.6 | 2.8 | Less than 0.1 |
| Sample 1 | 24.5 | 2.1 | 0.43 |
| Sample 2 | 21.2 | 1.9 | 0.52 |
| Sample 3 | 18.3 | 1.4 | 0.73 |
| Sample 4 | 17.3 | 1.3 | 0.75 |

Referring to [Table 1] and [Table 2], in the case of Samples 1 and 2 in which the calculated potential density difference ($\alpha$) of the positive electrode current collector is 0.20 or less, it can be confirmed that the ultimate tensile strength of the positive electrode current collector is 20 kfg/mm$^2$ or greater and the elongation is 2.0% or greater. In addition, it can be confirmed that as the calculated potential density difference ($\alpha$) of the positive electrode current collector increases and becomes greater than 0.20, mechanical properties, such as the ultimate tensile strength and the elongation, decrease significantly. In the case of a positive electrode current collector having an ultimate tensile strength of less than 20 kfg/mm$^2$ or an elongation of less than 2.0%, there is a very high possibility that an aluminum foil will be fractured during a roll-to-roll process of an electrode, so that the defect rate tends to increase rapidly.

(c) Relationship between potential density difference ($\alpha$) and defect rate compared to normal state

Nine aluminum foils (Sample A) having a thickness of 15 $\mu$m, nine aluminum foils (Sample B) having a thickness of 15 $\mu$m, and nine aluminum foil (Sample C) having a thickness of 15 $\mu$m were prepared in 50 sets of 10 pieces, respectively, and were heat-treated as shown in Table 3 below.

As described above, X-ray diffraction (XRD) analysis was performed on each aluminum foil to calculate a potential density difference ($\alpha$) compared to a normal state, and an average value thereof was obtained.

[Table 3]

| Sample number (5 sets each) | Conditions of heat-treatment | | Sample A | Sample B | Sample C |
|---|---|---|---|---|---|
| | Temperature (°C) | Time (minutes) | Average $\alpha$ value | Average $\alpha$ value | Average $\alpha$ value |
| 1 | 100 | 3 | 0.01 | 0.05 | 0.01 |
| 2 | 120 | 3 | 0.03 | 0.07 | 0.03 |
| 3 | 140 | 3 | 0.05 | 0.09 | 0.07 |
| 4 | 160 | 3 | 0.07 | 0.11 | 0.09 |
| 5 | 170 | 3 | 0.09 | 0.13 | 0.11 |
| 6 | 180 | 3 | 0.11 | 0.19 | 0.15 |
| 7 | 190 | 3 | 0.19 | 0.23 | 0.21 |
| 8 | 200 | 3 | 0.27 | 0.31 | 0.27 |
| 9 | 230 | 3 | 0.31 | - | - |

In addition, the ultimate tensile strength and the elongation were measured for the samples, and the ratio of positive electrode current collectors having an ultimate tensile strength of less than 20 kfg/mm$^2$, or having an elongation of less than 2.0% was obtained.

[Table 4]

| Sample number (5 sets each) | Sample A | | Sample B | | Sample C | |
|---|---|---|---|---|---|---|
| | Average $\alpha$ value | Defective rate (%) | Average $\alpha$ value | Defective rate (%) | Average $\alpha$ value | Defective rate (%) |
| 1 | 0.01 | 1 | 0.01 | 2 | 0.01 | 2 |
| 2 | 0.03 | 1 | 0.03 | 3 | 0.03 | 1 |
| 3 | 0.05 | 3 | 0.05 | 3 | 0.05 | 2 |
| 4 | 0.07 | 5 | 0.07 | 5 | 0.07 | 5 |
| 5 | 0.09 | 6 | 0.09 | 4 | 0.09 | 4 |
| 6 | 0.11 | 6 | 0.11 | 6 | 0.11 | 8 |
| 7 | 0.19 | 21 | 0.13 | 9 | 0.15 | 19 |
| 8 | 0.27 | 52 | 0.19 | 26 | 0.21 | 34 |
| 9 | 0.31 | 87 | - | - | 0.27 | 54 |

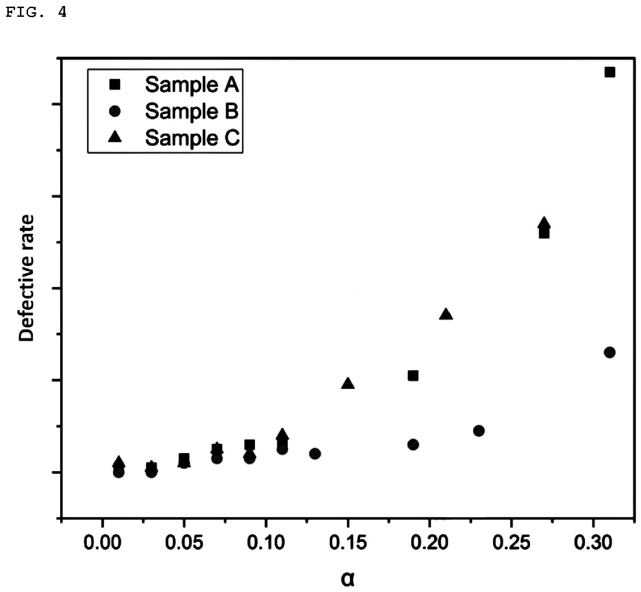

As can be confirmed from Table 4 and FIG. 4 above, it can be confirmed that the defect rate increases as the potential density difference ($\alpha$) with respect to a normal state increases, and the defect rate further increases as the potential density difference ($\alpha$) with respect to a normal state further increases.

[Description of the Reference Numerals or Symbols]

100: Electrode manufacturing apparatus

110: Unwinding part

120: Transfer part

130: Coating part

131: Active material application part

132: Drying part

140: Inspection unit

150: Roll-pressing part

160: Winding part

**Claims**

1. An apparatus for inspecting an electrode current collector, the apparatus comprising:

   a data collection unit, which is on an electrode current collector between a plurality of transfer rollers for transferring or stopping the electrode current collector in a longitudinal direction, and configured to perform XRD analysis on the electrode current collector in a stationary state to collect full-width-of-half-maximum data of a (hkl) plane; and
   a selection unit configured to select an electrode current collector having a potential density difference ($\alpha$) of 0.20 or less as defined by Equation 1 below by using the above data:

   [Equation 1]

   $$\alpha = \frac{\sqrt{(\frac{A(111) - B(111)}{A(111)})^2 + (\frac{A(200) - B(200)}{A(200)})^2 + (\frac{A(220) - B(220)}{A(220)})^2 + (\frac{A(311) - B(311)}{A(311)})^2}}{4}$$

   wherein in Equation 1 above,
   A(hkl) is a full width of half maximum of a (hkl) plane of a reference electrode current collector, wherein A(111) =0.089, A(200)=0.102, A(220)=0.113, and A(311)=0.138, and
   B(hkl) is a full width of half maximum of a (hkl) plane of an electrode current collector to be inspected.

2. The apparatus of claim 1, wherein the selection unit is configured to select an electrode current collector having a potential density difference ($\alpha$) of 0.18 or less.

3. The apparatus of claim 1, wherein:

   the electrode current collector comprises a plurality of coating regions respectively coated with an electrode slurry composition, and an uncoated portion between the plurality of coating regions; and
   the data collection unit is configured to perform XRD analysis on the uncoated portion to collect the full-width-of-half-maximum data of the (hkl) plane.

4. The apparatus of claim 1, wherein the electrode current collector selected by the selection unit has an ultimate tensile strength (UTS) of 20.0 kfg/mm$^2$ or greater.

5. The apparatus of claim 1, wherein the electrode current collector selected by the selection unit has an elongation (EL) of 1.5% or greater.

6. The apparatus of claim 1, wherein the electrode current collector selected by the selection unit has a crystal grain size

of 0.70 μm or less.

7. The apparatus of claim 1, wherein the electrode current collector is a positive electrode current collector.

8. An apparatus for manufacturing an electrode, the apparatus comprising:

a roller-shaped unwinding part in which an electrode current collector is wound in one direction;
a transfer part configured to continuously transfer the electrode current collector;
a coating part configured to apply and dry an electrode active material layer on at least one surface of the electrode current collector; and
an inspection unit including the inspection apparatus of claim 1.

9. The apparatus of claim 8, wherein the electrode current collector heat-treated in the coating part is selected through the inspection unit.

10. The apparatus of claim 8, wherein the electrode current collector is a positive electrode current collector.

11. A method for manufacturing an electrode, the method comprising processes of:

(S1) unwinding and then continuously feeding and transferring a current collector from a roller-shaped unwinding part in which an electrode current collector is wound in one direction;
(S2) applying and drying an electrode active material layer on at least one surface of the electrode current collector; and
(S3) inspecting the electrode current collector,
wherein the process of inspecting of the electrode current collector includes steps of:

(a) stopping the electrode current collector being transferred, and performing XRD analysis on the electrode current collector to collect full-width-of-half-maximum data of a (hkl) plane;
(b) selecting an electrode current collector having a potential density difference ($\alpha$) of 0.20 or less as defined by Equation 1 below by using the above data; and
(c) resuming transferring the electrode current collector:

[Equation 1]

$$\alpha = \frac{\sqrt{(\frac{A(111)-B(111)}{A(111)})^2 + (\frac{A(200)-B(200)}{A(200)})^2 + (\frac{A(220)-B(220)}{A(220)})^2 + (\frac{A(311)-B(311)}{A(311)})^2}}{4}$$

wherein in Equation 1 above,

A(hkl) is a full width of half maximum of a (hkl) plane of a reference electrode current collector, wherein A(111)=0.089, A(200)=0.102, A(220)=0.113, and A(311)=0.138, and
B(hkl) is a full width of half maximum of a (hkl) plane of an electrode current collector to be inspected.

12. The method of claim 11, further comprising (S4) a process of roll-pressing the electrode current collector on which the electrode active material layer is applied and dried; and (S5) a winding process for winding the roll-pressed electrode current collector into a roll form.

FIG. 1

FIG. 2

FIG. 3

FIG. 4

## INTERNATIONAL SEARCH REPORT

| International application No. |
| --- |
| **PCT/KR2024/015132** |

| | |
| --- | --- |
| **A.** | **CLASSIFICATION OF SUBJECT MATTER** |
| | **G01N 23/20**(2006.01)i; **H01M 4/64**(2006.01)i; **H01M 4/04**(2006.01)i; **H01M 4/02**(2006.01)i |

According to International Patent Classification (IPC) or to both national classification and IPC

| **B.** | **FIELDS SEARCHED** |
| --- | --- |

Minimum documentation searched (classification system followed by classification symbols)

G01N 23/20(2006.01); C30B 25/20(2006.01); C30B 29/38(2006.01); G01N 21/3554(2014.01); G01N 21/55(2006.01); G01N 23/20016(2018.01); G01N 23/203(2006.01); G01N 23/2055(2018.01); H01L 21/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전극 집전체(electrode current collector), XRD(X-ray diffraction), 반치폭(full width at half maximum), 전위 밀도(dislocation density), (hkl)면((hkl)plane)

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| A | KR 10-2563299 B1 (SFA ENGINEERING CORP.) 04 August 2023 (2023-08-04)<br>See paragraph [0045], claims 1 and 15-18 and figure 1. | 1-12 |
| A | JP 2015-188003 A (NIPPON STEEL & SUMITOMO METAL CORP.) 29 October 2015 (2015-10-29)<br>See claim 1. | 1-12 |
| A | KR 10-2023-0096326 A (LG CHEM, LTD.) 30 June 2023 (2023-06-30)<br>See paragraphs [0038]-[0206] and figures 1-4. | 1-12 |
| A | JP 2009-281782 A (NIPPON STEEL CORP.) 03 December 2009 (2009-12-03)<br>See paragraphs [0027]-[0069]. | 1-12 |
| A | JP 2020-033253 A (SCIOCS CO., LTD. et al.) 05 March 2020 (2020-03-05)<br>See claims 1-6. | 1-12 |

| ☐ Further documents are listed in the continuation of Box C. | ☑ See patent family annex. |
| --- | --- |

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **02 January 2025** | **03 January 2025** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/015132**

| Patent document cited in search report | | | Publication date (day/month/year) | Patent family member(s) | | | Publication date (day/month/year) |
|---|---|---|---|---|---|---|---|
| KR | 10-2563299 | B1 | 04 August 2023 | KR 10-2022-0097693 | | A | 08 July 2022 |
| JP | 2015-188003 | A | 29 October 2015 | JP | 6197722 | B2 | 20 September 2017 |
| KR | 10-2023-0096326 | A | 30 June 2023 | None | | | |
| JP | 2009-281782 | A | 03 December 2009 | None | | | |
| JP | 2020-033253 | A | 05 March 2020 | JP | 2023-009085 | A | 19 January 2023 |
| | | | | JP | 2024-019512 | A | 09 February 2024 |
| | | | | JP | 7166998 | B2 | 08 November 2022 |
| | | | | JP | 7403608 | B2 | 22 December 2023 |
| | | | | JP | 7542713 | B2 | 30 August 2024 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230133820